# EUROPEAN PATENT SPECIFICATION

(11) **EP 3 739 603 B1**
(45) Date of publication and mention of the grant of the patent: **26.01.2022**
(21) Application number: 18900943.4
(22) Date of filing: 31.10.2018
(51) Int. Cl.: G21C 7/10, H01F 27/02, G21C 9/02, H01F 27/32, H01F 41/00, H01F 41/06

(54) **ELECTROMAGNETIC COIL ASSEMBLY FOR CONTROL ROD DRIVE MECHANISM, AND FABRICATION METHOD FOR SAME**
ELEKTROMAGNETISCHE SPULENANORDNUNG FÜR REGELSTABANTRIEBSMECHANISMUS UND HERSTELLUNGSVERFAHREN DAFÜR
ENSEMBLE BOBINE ÉLECTROMAGNÉTIQUE DESTINÉ À UN MÉCANISME D'ENTRAÎNEMENT DE TIGE DE COMMANDE, ET SON PROCÉDÉ DE FABRICATION

(30) Priority: 16.01.2018 CN 201810041590
(43) Date of publication of application: 18.11.2020
(73) Proprietor: Yu, Jie, Shanghai 200072 (CN)
(72) Inventor: Yu, Jie, Shanghai 200072 (CN)
(74) Representative: Sun, Yiming
(86) International application number: PCT/CN2018/113019
(87) International publication number: WO 2019/140977

(56) References cited:
- CN-A- 103 329 209
- CN-A- 106 782 993
- CN-A- 106 910 589
- CN-A- 106 910 589
- CN-A- 108 257 761
- CN-A- 108 257 761
- CN-U- 207 676 764

## Description

### FIELD OF THE INVENTION

The present invention relates to the technical field of a reactor control rod drive mechanism, and more particularly to a control rod drive mechanism electromagnetic coil assembly and a manufacturing method of the assembly.

### BACKGROUND OF THE INVENTION

The reactor is the core part of the nuclear power plant, and the control rod drive mechanism (CRDM) on the reactor can raise, lower, or maintain the position of the control rod in the core, to control the fission rate of the reactor, realize the start and stop of the reactor and the adjustment of the reactor power, and the control rod can be quickly inserted (rapid drop rod) under accident conditions, so that the reactor can be emergency shutdown in a short time to ensure the safe operation of the nuclear power plant. CRDM achieves the above functions inseparable from the electromagnetic coil assembly. Because of its special working environment and the importance of function, the electromagnetic coil assembly must have characteristics of stability and reliability, high temperature resistance, good insulation performance, radiation resistance, and longevity.

In the prior art, for the design of the life and reliability of the electromagnetic coil, industry technicians have made many explorations on the structure of the electromagnetic coil assembly and the materials of its parts, such as described in application document of the invention with the application number CN103329209 A, or the application number CN106910589 A, or the application number CN201410500311.4. Further research on the life and stability of the electromagnetic coil assembly will undoubtedly further improve the reliability of the control rod drive mechanism.

### BRIEF SUMMARY OF THE INVENTION

Further research on the life and stability of the electromagnetic coil assembly proposed above will undoubtedly further improve the reliability of the control rod drive mechanism. The present invention provides the control rod drive mechanism electromagnetic coil assembly and the manufacturing method of the assembly, In this way, the coil assembly provided in this scheme or the coil assembly obtained by the method can significantly reduce the internal temperature of the coil, and achieve the purpose of improving the reliability of the CRDM electromagnetic coil assembly and extending the service life of the CRDM electromagnetic coil assembly.

The present invention provides the control rod drive mechanism electromagnetic coil assembly to solve the problem through the following technical points: the control rod drive mechanism electromagnetic coil assembly, including a coil and a yoke for inserting the coil, the yoke is disposed with a mosaic hole, the coil is installed in a mosaic hole, the yoke includes a first yoke and a second yoke, the mosaic hole is disposed on the first yoke;
the first yoke and the second yoke are connected, and the second yoke is also disposed with a through hole for cooperating with the sealing shell assembly;
in both the first yoke and the second yoke, the thermal conductivity of the first yoke is stronger than the thermal conductivity of the second yoke.

For the reliability and life design of the electromagnetic coil assembly of the control rod drive mechanism, the existing technology includes the schemes of the use of high temperature resistant non-metallic materials as the coil frame, the use of metal materials with better temperature tolerance as the coil frame, to strength the heat dissipation of the coil.

In this scheme, the first yoke and the second yoke are respectively used as a part of the yoke, and at the same time, the coils are all installed on the first yoke through the mosaic holes on the first yoke, in this way, when the sealing shell assembly is matched, the center hole on the coil and the through hole on the second yoke serve as a passage for the sealing shell assembly to pass through the assembly.

At the same time, in the prior art, since the CRDM pressure-resistant sealed shell assembly located in the center hole of the module has its own temperature of about 300°C during operation, the heat transferred to the coil of the module by thermal conduction is very large. The thermal conductivity of the first yoke is stronger than that of the second yoke, in this way, the heat from the second yoke to the first yoke and the coil due to the heat transfer method can be effectively reduced, the heat generated during the work is dissipated by the first yoke with better thermal conductivity. Therefore, the yoke structure design provided by this scheme reduces the heat transferred to the coil by the sealing shell assembly while the heat generated by the coil can be well conducted through the first yoke, which can make the coil work in a relatively low temperature environment to significantly reduce the internal temperature of the coil, improve the reliability of the CRDM electromagnetic coil assembly and extend the service life of the CRDM electromagnetic coil assembly.

As preferred, as a specific implementation form of the first yoke and the second yoke, the material of the first yoke can be pure iron, electromagnetic pure iron, meanwhile the heat dissipation fins are processed on the outer surface of the first yoke to increase the heat dissipation area of the first yoke; the material of the second yoke can be cast iron, martensitic stainless steel, magnetic alloy, soft ferrite, amorphous soft magnetic alloy. As a person skilled in the art, the thermal conductivity described above is the thermal conductivity of the material, which can be reflected by the thermal conductivity of the material.

Preferably, it is set as: the projection of the coil toward the end surface of the second yoke falls on the outside of the through hole. It is defined as: the projection of the coil toward the end surface of the second yoke falls on the outside of the through hole, that is, the projection of the above coil is located on the outside of the through hole, in this way, it is equivalent that the inner diameter of the channel at the position of the coil in this assembly is larger than the inner diameter of the channel at the position of the second yoke, when the assembly is matched with the sealed shell assembly, the matching position of the assembly and the sealed shell assembly is located at the position where the second yoke is located, in this case, direct contact between the coil and the sealed shell assembly can be avoided. The structural features of this scheme prevent direct contact between the coil and the sealed shell assembly, so there is no direct heat conduction between the coil and the sealed shell assembly.

When the seal case assembly is not in direct contact with the coil, the way of the heat transferred to the coil becomes heat radiation. In order to further reduce the heat transferred to the coil by the heat radiation of the sealing case, it is preferable to set: the inner hole surface of the coil, that is, the hole wall of the center hole of the coil is polished to improve the brightness of the inner hole surface of the coil, such as polished to a mirror surface, which can effectively reflect the heat radiation generated by the sealed shell to achieve the purpose of further reducing the heating of the coil.

Further technical schemes are:
as a specific implementation form of the mosaic hole and the through hole, the mosaic hole and the through hole are both circular holes, and the axis of the mosaic hole and the axis of the through hole are collinear;
the coil includes an inner frame and a coil winding wound on the inner frame. The inner frame is cylindrical, and the axis of the inner frame is collinear with the axis of the mosaic hole. The diameter of the center hole of the inner frame is larger than that of the through hole.

The number of the first yokes is one more than the number of the second yokes. Two adjacent first yokes are all connected by the second magnetic yoke. Each first yoke is disposed with the mosaic holes, and each mosaic hole is installed with the coil. In this scheme, the first yoke can be divided into separate sections, which facilitates a single first yoke to obtain a better external heat dissipation environment. In this scheme, which limited the number of the first yokes is one more than the number of the second yokes, in fact it is intended to limit the second yoke between two adjacent first yokes, the second yoke should also be understood as the second yoke between the two first yokes. If the outer side of the first yoke at the end of the assembly is also connected to the second yoke to form more connection points between the assembly and the containment assembly, the newly added second yoke should not be included in the counting range of the above quantity difference.

As mentioned above, because the materials of the first yoke and the second yoke are different, as a form of detachable connection, the connection process will not affect the performance of the first yoke and the second yoke, the first yoke and the second yoke are connected by bolts, and a sealing ring is arranged on the connecting surface of the first yoke and the second yoke. The above sealing ring is used to seal and isolate the inside and outside of the module, that is, the sealing ring provides radial sealing and has the characteristic of improving the moisture resistance of the coil of the module. As preferred, since the electromagnetic coil assembly of the control rod drive mechanism generally includes three coils, it is preferable to set that the end of the assembly are all the second yokes, at the same time, the second yoke at the end is also disposed with an annular sealing groove, the sealing groove is used to install the sealing ring for realizing the axial sealing of the assembly, the structure is also beneficial to increase the contact area between the assembly and the sealed shell assembly, and is beneficial to the reliability of the connection between the assembly and the sealed shell assembly.

As an implementation scheme in which the first yoke can completely wrap the coil inside, the depth of the mosaic hole is equal to or greater than the length of the coil, and the space between the wall of the mosaic hole and the coil is also filled with potting layer;
the two end faces of the coil are located between the two end faces of the mosaic hole or the end face of the coil coincides with the end face of the mosaic hole. In this scheme, the first yoke can provide protection for the coil, and at the same time, the first yoke can serve as the outer skeleton of the coil, which is beneficial to simplify the structural design of the coil. The above potting layer not only benefits the structural stability of this assembly, but also makes the assembly more resistant to earthquakes, at the same time, the above potting layer facilitates the heat conduction between the coil and the first yoke.

The first yoke and the second yoke are also disposed with lead holes. The lead holes on the first yoke and the mosaic holes are relatively independent holes. The lead holes on the second yoke and the through holes are both between the relatively independent holes. The lead hole and the mosaic hole are further defined as relatively independent holes, which are intended to separate the lead hole and the mosaic hole from each other, so that the potting material can effectively prevent the potting compound from blocking the lead hole and affecting the threading operation during subsequent assembly when the potting layer is disposed, and at the same time, it also avoids the waste of the potting material or the impact of the potting effect caused by the loss of the potting material from the lead hole when the potting layer is obtained by potting. As a person skilled in the art, it should be understood that not all of the first yokes and the second yokes are disposed with lead holes, and according to actual needs, the second yoke at one end of the electromagnetic coil assembly and the first yoke directly connected to it are not disposed with lead holes.

In order to improve the heat dissipation of the coil end, the coil end is also covered with a potting layer. At the same time, after the above potting layer is disposed, the length of the combined body of the potting layer and the coil is controllable, in this way, the length of the combined body is slightly larger than the depth of the corresponding mosaic hole. When two adjacent first yokes and second yokes are connected, the potting layer at the end can be compressed to seal between the first yoke and the second yoke at the coil end.

In order to improve the thermal conductivity of the potting layer, the potting layer is also embedded with thermally conductive insulating particles. The thermally conductive insulating particles may be quartz sand, flint silica sand, PPS polyphenylene sulfide, PA46 nylon, etc.

At the same time, the case also provides a method for manufacturing the control rod drive mechanism electromagnetic coil assembly, the method is used to manufacture any the above control rod drive mechanism electromagnetic coil assemblies, the method includes the following steps performed in sequence:
S1, winding a coil winding on the skeleton to obtain a coil, and embedding the obtained coil in the mosaic hole of the first yoke;
S2, encapsulate the assembly composed of the coil and the first yoke as a whole to obtain a potting layer in the space between the hole wall of the inlaid hole and the coil;
S3, complete the assembly of the first yoke and the second yoke.

This scheme is the processing method of the electromagnetic coil assembly of the control rod drive mechanism provided above.

Preferably, the specific form of assembly in S3 uses bolt connection, and a sealing ring is disposed on the connection surface of the first yoke and the second yoke.

The invention has the following beneficial effects:
the electromagnetic coil assembly structure provided by the present invention and the product obtained by using the manufacturing method provided by the present invention have the following characteristics:
the structural features of this scheme avoid direct contact between the coil and the sealed shell assembly, so there is no direct heat conduction between the coil and the sealed shell assembly; at the same time, the thermal conductivity of the first yoke is stronger than the thermal conductivity of the second yoke. Which can effectively reduce the heat from the second yoke to the first yoke and the coil due to the heat conduction transfer method, and at the same time, the heat generated by the coil itself during the work is caused by the first yoke with better thermal conductivity Distribute. Therefore, the yoke structure design provided by this scheme reduces the heat transferred to the coil by the sealing shell assembly while the heat generated by the coil can be well conducted through the first yoke, which can make the coil work in a relatively low temperature environment in order to significantly reduce the internal temperature of the coil, improve the reliability of the CRDM electromagnetic coil assembly and extend the service life of the CRDM electromagnetic coil assembly.

### BRIEF DESCRIPTION OF THE DRAWINGS

FIG. 1 is a three-dimensional schematic diagram of a specific embodiment of the electromagnetic coil assembly of the control rod drive mechanism according to the present invention;
FIG. 2 is a schematic structural cross-sectional view of a specific embodiment of the electromagnetic coil assembly of a control rod drive mechanism according to the present invention;
FIG. 3 is a schematic diagram showing the connection relationship between the coil and the first yoke and the connection relationship between the first yoke and the second yoke in a specific embodiment of the electromagnetic coil assembly of a control rod drive mechanism according to the present invention.

### DETAILED DESCRIPTION OF THE PREFERRED EMBODIMENTS

The present invention will be further described in detail below in conjunction with embodiments, but the structure of the present invention is not limited to the following embodiments.

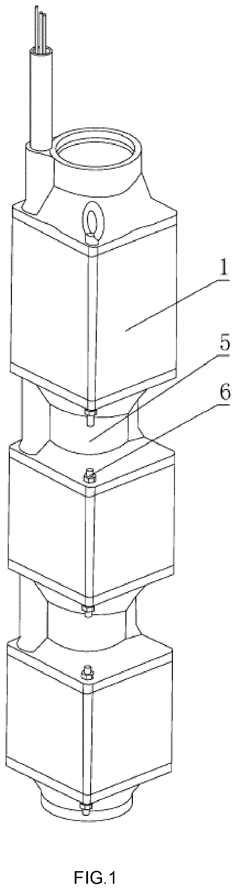

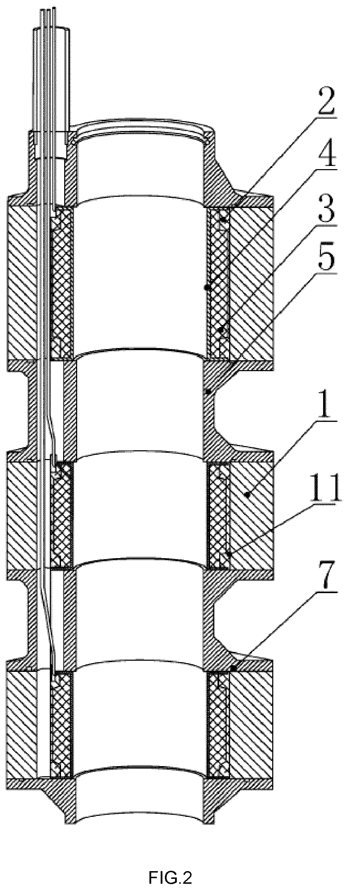

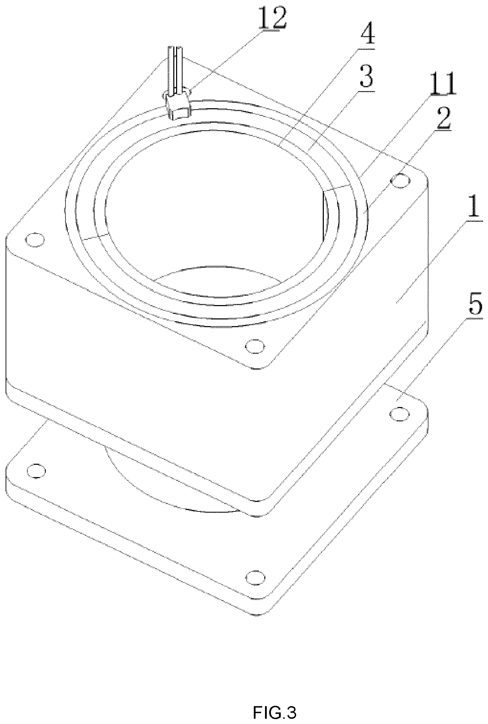

Embodiment 1:
as shown in Figures 1 to 3, the electromagnetic coil assembly of the control rod drive mechanism includes a coil 3 and a yoke for inserting the coil 3, the yoke is disposed
with an insert hole 11, and the coil 3 is mounted on the insert in the hole 11, the yoke includes a first yoke 1 and a second yoke 5, and the mosaic hole 11 is disposed on the first yoke 1;
the first yoke 1 is connected to the second yoke 5, the second yoke 5 is also disposed with a through hole for cooperating with the sealing shell assembly, and the projection of the coil 3 toward the end surface of the second yoke 5 falls on the Describe the outside of the through hole;
in both the first yoke 1 and the second yoke 5, the thermal conductivity of the first yoke 1 is stronger than the thermal conductivity of the second yoke 5.

For the reliability and life design of the electromagnetic coil assembly of the control rod drive mechanism, the existing technology includes the use of high temperature resistant non-metallic materials as the coil frame, the use of metal materials with better temperature tolerance as the coil frame, and the strengthened coil 3 the heat dissipation and other programs.

In this scheme, the first yoke 1 and the second yoke 5 are respectively used as a part of the yoke, and at the same time, the coil 3 is installed on the first yoke 1 through the mosaic hole 11 on the first yoke 1, in this way, when the assembly is assembled with the sealing shell assembly, the center hole on the coil 3 and the through hole on the second yoke 5 serve as a passage for the sealing shell assembly to pass through the assembly. In this scheme, it is defined that the second yoke 5 is further disposed with a through hole for cooperating with the sealing shell assembly, and the projection of the coil 3 toward the end surface of the second yoke 5 falls outside the through hole, that is, the above coil the projection of 3 is located on the outside of the through hole, so that the inner diameter of the channel at the position of the coil 3 in this assembly is larger than the inner diameter of the channel at the position of the second yoke 5, when this assembly is matched with the sealing shell assembly, the assembly and the seal the matching position of the shell assembly is located at the position where the second yoke 5 is located. In this case, it is possible to avoid direct contact between the coil 3 and the sealed shell assembly.

At the same time, in the prior art, since the CRDM pressure-resistant sealed shell assembly located in the center hole of the module has its own temperature of about 300°C during operation, the heat transferred to the coil 3 of the module by thermal conduction is very large, and the structural features of this scheme prevent direct contact between the coil 3 and the sealing shell assembly, so there is no direct heat conduction between the coil 3 and the sealing shell assembly; at the same time, the thermal conductivity of the first yoke 1 is stronger than that of the second yoke 5 thermal conductivity, which can effectively reduce the heat from the second yoke 5 to the first yoke 1 and the coil due to the heat conduction transfer method, and at the same time, the heat generated by the coil 3 itself during the work process has better heat conduction the first yoke 1 is emitted. Therefore, the yoke structure design provided by this scheme reduces the heat transferred to the coil 3 by the sealing shell assembly while the heat generated by the coil 3 can be well conducted through the first yoke 1, so that the coil 3 can work in a relatively under the low temperature environment, the purpose of significantly reducing the internal temperature of the coil 3, improving the reliability of the CRDM electromagnetic coil assembly and extending the service life of the CRDM electromagnetic coil assembly are achieved.

Preferably, as a specific implementation form of the first yoke 1 and the second yoke 5, the material of the first yoke 1 may be pure iron, electromagnetic pure iron, etc., while being processed on the outer surface of the first yoke 1, the heat dissipation fins are disposed to increase the heat dissipation area of the first yoke 1; the material of the second yoke 5 can be cast iron, martensitic stainless steel, magnetic alloy, soft ferrite, amorphous soft magnetic alloy.

Embodiment 2:
as shown in Figures. 1 to 3, this embodiment is further defined on the basis of embodiment 1: as a specific implementation form of the mosaic hole 11 and the through hole, the mosaic hole 11 and the through hole are both circular holes, and the axis of the mosaic hole 11 and the axis of the through hole are collinear;
the coil 3 includes an inner frame 4 and a winding of the coil 3 wound on the inner frame 4, the inner frame 4 is cylindrical, and the axis of the inner frame 4 is collinear with the axis of the mosaic hole 11, the diameter of the center hole is larger than the diameter of the through hole.

The number of the first yokes 1 is one more than the number of the second yokes 5, two adjacent first yokes 1 are connected by a second yoke 5, and each first yoke 1 is disposed with a mosaic hole 11, coils 3 are installed in each mosaic hole 11. In this scheme, the first yoke 1 can be spaced apart, which facilitates a single first yoke 1 to obtain a better external heat dissipation environment.

As described above, since the materials of the first yoke 1 and the second yoke 5 are different, as a detachable connection, the connection process does not affect the performance of the first yoke 1 and the second yoke 5. The first yoke 1 and the second yoke 5 are connected by a bolt 6, and a sealing ring 7 is further provided on the connecting surface of both the first yoke 1 and the second yoke 5. The above sealing ring 7 is used to seal the inside and outside of this assembly, that is, the sealing ring 7 disposes a radial seal, and has the characteristics of improving the moisture resistance of the coil 3 of this assembly. Preferably, since the electromagnetic coil assembly of the control rod drive mechanism generally includes three coils 3, it is preferred that the end portions of the assembly are all second yokes 5, and at the same time, the second yoke 5 at the end is also disposed with an annular sealing groove, which is used to install a sealing ring for achieving axial sealing of the assembly. The structure form is also beneficial to increase the contact area between the assembly and the sealing shell assembly, and to improve the reliability of the connection between the assembly and the sealing shell assembly.

As an implementation scheme in which the first yoke 1 can completely wrap the coil 3 inside, the depth of the mosaic hole 11 is equal to or greater than the length of the coil 3, and the hole wall of the mosaic hole 11 and the coil 3 the space is also filled with potting layer 2;
the two end faces of the coil 3 are located between the two end faces of the mosaic hole 11 or the end face of the coil 3 coincides with the end face of the mosaic hole 11. In this scheme, the first yoke 1 can provide protection for the coil 3, and at the same time, the first yoke 1 can serve as the outer frame 4 of the coil 3, which is beneficial to simplify the structural design of the coil 3. The above potting layer 2 not only benefits the structural stability of the assembly, but also makes the assembly more resistant to earthquakes. At the same time, the above potting layer 2 facilitates the heat conduction between the coil 3 and the first yoke 1.

The first yoke 1 and the second yoke 5 are also disposed with lead holes 12. The lead holes 12 on the first yoke 1 and the mosaic holes 11 are relatively independent holes. The lead holes 12 and the through hole are relatively independent holes. The lead holes 12 and the mosaic hole 11 are further defined as relatively independent holes, which are intended to separate the lead holes 12 and the mosaic hole 11 from each other, in this way, it is possible to effectively avoid the potting when the potting layer 2 is disposed. The sealing material blocks the lead holes 12 and affects the threading operation during subsequent assembly of the assembly. At the same time, it also avoids the loss of the potting material from the lead holes 12 when the potting layer 2 is obtained by the potting, resulting in wasted potting material or affecting the potting effect.

In order to improve the heat dissipation of the end of the coil 3, the end of the coil 3 is also covered with the potting layer 2. At the same time, after the above potting layer 2 is disposed, the length of the combined body of the potting layer 2 and the coil 3 is controllable, in this way, the length of the combined body can be slightly greater than the depth of the corresponding mosaic hole 11 when the two adjacent first yoke 1 and the second yoke 5 are connected, the potting layer 2 at the end can be compressed for sealing between the first yoke 1 and the second yoke 5 at the end of the coil 3.

In order to improve the thermal conductivity of the potting layer 2, the potting layer 2 is also embedded with thermally conductive insulating particles. The thermally conductive insulating particles may be quartz sand, flint silica sand, PPS polyphenylene sulfide, PA46 nylon.

Embodiment 3:
this embodiment provides a method for manufacturing a control rod drive mechanism electromagnetic coil assembly. The method is used to manufacture the control rod drive mechanism electromagnetic coil assembly disposed in any of the above. The method includes the following steps performed in sequence:
S1, winding the coil 3 on the bobbin 4 to obtain the coil 3, and embedding the obtained coil 3 in the mosaic hole 11 of the first yoke 1;
S2, encapsulate the assembly composed of the coil 3 and the first yoke 1 as a whole to obtain the potting layer 2 in the space between the hole wall of the inlaid hole 11 and the coil 3;
S3, the assembly of the first yoke 1 and the second yoke 5 is completed.

This scheme is a processing method of any control rod drive mechanism electromagnetic coil assembly scheme provided in any of the above embodiments. Preferably, the specific form of assembly in S3 is connected by bolts 6, and a sealing ring 7 is disposed on the connecting surface of the first yoke 1 and the second yoke 5. The above content is a further detailed description of the present invention in conjunction with specific preferred embodiments, and it cannot be assumed that the specific embodiments of the present invention are limited to these descriptions. For a person of ordinary skill in the technical field to which the present invention belongs, other embodiments derived without departing from the technical scheme of the present invention should be included in the protection scope of the present invention which is defined by the appended claims.

## Claims

1. An electromagnetic coil assembly of a control rod drive mechanism, including a coil (3) and a yoke (1, 5) for mounting the coil (3), an insertion hole (11) disposed on the yoke (1, 5), wherein the coil (3) is installed in the insertion hole (11), the yoke (1, 5) includes a first yoke (1) and a second yoke (5), and the insertion hole (11) is set on the first yoke (1);
the first yoke (1) is connected to the second yoke (5), and the second yoke (5) is further disposed with a through hole for matching with a sealing shell assembly;
**characterized in that**
amongst the first yoke (1) and the second yoke (5), a thermal conductivity of the first yoke (1) is stronger than a thermal conductivity of the second yoke (5).

2. The electromagnetic coil assembly for the control rod drive mechanism according to claim 1, wherein the insertion hole (11) and the through hole are both circular holes, and an axis of the through hole is collinear with an axis of the insertion hole (11);
the coil (3) includes an inner frame and a coil winding wound on the inner frame, the inner frame is cylindrical, and an axis of the inner frame is collinear with the axis of the insertion hole (11), wherein a diameter of a center hole of the inner frame is larger than that of the through hole.

3. The electromagnetic coil assembly for the control rod drive mechanism according to claim 1, wherein a number of the first yokes (1) is one more than a number of the second yokes (5), and two adjacent first yokes (1) are connected by one of the second yokes (5), at each of said first yokes (1) a said insertion hole (11) is disposed, and in each of the insertion holes (11) a said coil (3) is installed.

4. The electromagnetic coil assembly for the control rod drive mechanism according to claim 1, wherein the first yoke (1) and the second yoke (5) are connected by a bolt (6), and a sealing ring (7) is further disposed on a connecting surface of the first yoke (1) and the second yoke (5).

5. The electromagnetic coil assembly of the control rod drive mechanism according to claim 1, wherein a depth of the insertion hole (11) is equal to or greater than a length of the coil (3), and a space between a hole wall and the coil (3) is also filled with a potting layer (2);
two end faces of the coil (3) are located between two end faces of the insertion hole (11) or an end face of the coil (3) coincides with an end face of the insertion hole (11).

6. The electromagnetic coil assembly for the control rod drive mechanism according to claim 1, wherein the first yoke (1) and the second yoke (5) are further disposed with lead holes (12), the lead holes (12) on the first yoke (1) and the insertion hole (11) are relatively independent holes, and the lead holes (12) on the second yoke (5) and the through hole are relatively independent holes.

7. The electromagnetic coil assembly for the control rod drive mechanism according to claim 5, wherein the end of the coil (3) is also covered with a potting layer (2).

8. The electromagnetic coil assembly of the control rod drive mechanism according to claim 5, wherein the potting layer (2) is further embedded with thermally conductive insulating particles.

9. A method for manufacturing a control rod drive mechanism electromagnetic coil assembly, wherein the method is used for manufacturing the control rod drive mechanism electromagnetic coil assembly provided in any of claims 1 to 8, wherein the method includes the following steps performed sequentially:
S1, winding a coil winding on a bobbin (4) to obtain the coil (3), and embedding the obtained coil (3) in the insertion hole (11) of the first yoke (1);
S2, encapsulating the assembly composed of the coil (3) and the first yoke (1) to obtain a potting layer (2) in a space between a hole wall of the insertion hole (11) and the coil (3);
S3, completing the assembly of the first yoke (1) and the second yoke (5)
**characterized in that**
amongst the first yoke (1) and the second yoke (5), a thermal conductivity of the first yoke (1) is stronger than a thermal conductivity of the second yoke (5).

10. The method for manufacturing the control rod drive mechanism electromagnetic coil assembly according to claim 9, wherein a specific form of assembly in the S3 adopts bolt connection, and a sealing ring (7) is disposed on a connecting surface of the first yoke (1) and the second yoke (5).

## Patentansprüche

1. Elektromagnetische Spulenanordnung einer Steuerstab-Antriebsvorrichtung, die eine Spule (3) und ein Joch (1, 5) zum Befestigen der Spule (3), ein Einführungsloch (11), das auf dem Joch (1, 5) angeordnet ist, beinhaltet, wobei die Spule (3) in dem Einführungsloch (11) installiert ist, das Joch (1, 5) ein erstes Joch (1) und ein zweites Joch (5) beinhaltet und das Einführungsloch (11) auf das erste Joch (1) gesetzt ist;
das erste Joch (1) mit dem zweiten Joch (5) verbunden ist und das zweite Joch (5) ferner mit einem Durchgangsloch zum Anpassen an eine Dichtungsschalenanordnung angeordnet ist;
**dadurch gekennzeichnet, dass**
bei dem ersten Joch (1) und dem zweiten Joch (5) die Wärmeleitfähigkeit des ersten Jochs (1) höher ist als die Wärmeleitfähigkeit des zweiten Jochs (5).

2. Elektromagnetische Spulenanordnung für die Steuerstab-Antriebsvorrichtung nach Anspruch 1, wobei das Einführungsloch (11) und das Durchgangsloch beide kreisförmige Löcher sind und eine Achse des Durchgangslochs kollinear mit einer Achse des Einführungslochs (11) ist;
die Spule (3) einen inneren Rahmen und eine auf den inneren Rahmen gewickelte Spulenwicklung beinhaltet, der innere Rahmen zylindrisch ist und eine Achse des inneren Rahmens kollinear mit der Achse des Einführungslochs (11) ist, wobei ein Durchmesser eines Mittellochs des inneren Rahmens größer ist als der des Durchgangslochs.

3. Elektromagnetische Spulenanordnung für die Steuerstab-Antriebsvorrichtung nach Anspruch 1, wobei die Anzahl der ersten Joche (1) um eins größer ist als die Anzahl der zweiten Joche (5) und zwei benachbarte erste Joche (1) durch eines der zweiten Joche (5) verbunden sind, wobei an jedem der ersten Joche (1) das Einführungsloch (11) angeordnet ist und in jedem der Einführungslöcher (11) die Spule (3) installiert ist.

4. Elektromagnetische Spulenanordnung für die Steuerstab-Antriebsvorrichtung nach Anspruch 1, wobei das erste Joch (1) und das zweite Joch (5) durch einen Bolzen (6) verbunden sind und ein Dichtungsring (7) ferner an einer Verbindungsfläche des ersten Jochs (1) und des zweiten Jochs (5) angeordnet ist.

5. Elektromagnetische Spulenanordnung für die Steuerstab-Antriebsvorrichtung nach Anspruch 1, wobei eine Tiefe des Einführungslochs (11) gleich oder größer als eine Länge der Spule (3) ist und ein Raum zwischen einer Lochwand und der Spule (3) auch mit einer Vergussschicht (2) gefüllt ist;
zwei Stirnseiten der Spule (3) sich zwischen zwei Stirnseiten des Einführungslochs (11) befinden oder eine Stirnseite der Spule (3) mit einer Stirnseite des Einführungslochs (11) zusammenfällt.

6. Elektromagnetische Spulenanordnung für die Steuerstab-Antriebsvorrichtung nach Anspruch 1, wobei das erste Joch (1) und das zweite Joch (5) ferner mit Leitungslöchern (12) angeordnet sind, die Leitungslöcher (12) am ersten Joch (1) und das Einführungsloch (11) relativ unabhängige Löcher sind und die Leitungslöcher (12) am zweiten Joch (5) und das Durchgangsloch relativ unabhängige Löcher sind.

7. Elektromagnetische Spulenanordnung für die Steuerstab-Antriebsvorrichtung nach Anspruch 5, wobei das Ende der Spule (3) ebenfalls mit einer Vergussschicht (2) bedeckt ist.

8. Elektromagnetische Spulenanordnung für die Steuerstab-Antriebsvorrichtung nach Anspruch 5, wobei die Vergussschicht (2) ferner mit wärmeleitenden Isolierpartikeln eingebettet ist.

9. Verfahren zur Herstellung einer elektromagnetischen Spulenanordnung für die Steuerstab-Antriebsvorrichtung, wobei das Verfahren zur Herstellung der elektromagnetischen Spulenanordnung für die Steuerstab-Antriebsvorrichtung nach einem der Ansprüche 1 bis 8 verwendet wird, wobei das Verfahren die folgenden, nacheinander ausgeführten Schritte beinhaltet:
S1, Wickeln einer Spulenwicklung auf einen Spulenkörper (4), um die Spule (3) zu erhalten und Einbetten der erhaltenen Spule (3) in das Einführungsloch (11) des ersten Jochs (1);
S2, Einkapseln der aus der Spule (3) und dem ersten Joch (1) bestehenden Anordnung, um eine Vergussschicht (2) in einem Raum zwischen einer Lochwand des Einführungslochs (11) und der Spule (3) zu erhalten;
S3, Fertigstellen der Anordnung des ersten Jochs (1) und des zweiten Jochs (5),
**dadurch gekennzeichnet, dass**
bei dem ersten Joch (1) und dem zweiten Joch (5) die Wärmeleitfähigkeit des ersten Jochs (1) höher ist als die Wärmeleitfähigkeit des zweiten Jochs (5).

10. Verfahren zur Herstellung der elektromagnetischen Spulenanordnung für die Steuerstab-Antriebsvorrichtung nach Anspruch 9, wobei eine spezifische Form der Anordnung in S3 eine Bolzenverbindung annimmt und ein Dichtungsring (7) auf einer Verbindungsfläche des ersten Jochs (1) und des zweiten Jochs (5) angeordnet ist.

## Revendications

1. Ensemble de bobine électromagnétique d'un mécanisme d'entraînement de tige de commande, comprenant une bobine (3) et une culasse (1, 5) pour le montage de la bobine (3), un trou d'insertion (11) disposé sur la culasse (1, 5), dans lequel la bobine (3) est installée dans le trou d'insertion (11), la culasse (1, 5) comprend une première culasse (1) et une deuxième culasse (5), et le trou d'insertion (11) est prévu sur la première culasse (1) ;
la première culasse (1) est reliée à la deuxième culasse (5), et la deuxième culasse (5) est en outre pourvue d'un trou traversant pour l'adaptation à un ensemble de coque d'étanchéité ;
**caractérisé en ce que**
parmi la première culasse (1) et la deuxième culasse (5), une conductivité thermique de la première culasse (1) est plus élevée qu'une conductivité thermique de la deuxième culasse (5).

2. Ensemble de bobine électromagnétique pour le mécanisme d'entraînement de tige de commande selon la revendication 1, dans lequel le trou d'insertion (11) et le trou traversant sont tous deux des trous circulaires, et un axe du trou traversant est colinéaire avec un axe du trou d'insertion (11) ;
la bobine (3) comprend un cadre intérieur et un bobinage enroulé sur le cadre intérieur, et un axe du cadre intérieur est colinéaire avec l'axe du trou d'insertion (11), un diamètre d'un trou central du cadre intérieur étant supérieur à celui du trou traversant.

3. Ensemble de bobine électromagnétique pour le mécanisme d'entraînement de tige de commande selon la revendication 1, dans lequel un nombre des premières culasses (1) est supérieur de 1 à un nombre des deuxièmes culasses (5), et deux premières culasses (1) adjacentes sont reliées par l'une des deuxièmes culasses (5), un trou d'insertion (11) est disposé dans chacune desdites premières culasses (1), et une desdites bobines (3) est installée dans chacun des trous d'insertion (11).

4. Ensemble de bobine électromagnétique pour le mécanisme d'entraînement de tige de commande selon la revendication 1, dans lequel la première culasse (1) et la deuxième culasse (5) sont reliées par un boulon (6), et une bague d'étanchéité (7) est en outre disposée sur une surface d'assemblage de la première culasse (1) et de la deuxième culasse (5).

5. Ensemble de bobine électromagnétique du mécanisme d'entraînement de tige de commande selon la revendication 1, dans lequel une profondeur du trou d'insertion (11) est égale ou supérieure à une longueur de la bobine (3), et un espace entre une paroi de trou et la bobine (3) est également rempli d'une couche d'enrobage (2) ;
deux faces terminales de la bobine (3) se trouvent entre deux faces terminales du trou d'insertion (11) ou une face terminale de la bobine (3) coïncide avec une face terminale du trou d'insertion (11).

6. Ensemble de bobine électromagnétique pour le mécanisme d'entraînement de tige de commande selon la revendication 1, dans lequel le première culasse (1) et le deuxième culasse (5) sont en outre pourvues de trous de guidage (12), les trous de guidage (12) sur la première culasse (1) et le trou d'insertion (11) sont des trous indépendants les uns des autres, et les trous de guidage (12) sur la deuxième culasse (5) et le trou traversant sont des trous indépendants les uns des autres.

7. Ensemble de bobine électromagnétique pour le mécanisme d'entraînement de tige de commande selon la revendication 5, dans lequel l'extrémité de la bobine (3) est également recouverte d'une couche d'enrobage (2).

8. Ensemble de bobine électromagnétique du mécanisme d'entraînement de tige de commande selon la revendication 5, dans lequel des particules isolantes thermiquement conductrices sont en outre incorporées dans la couche d'enrobage (2).

9. Procédé de fabrication d'un ensemble de bobine électromagnétique de mécanisme d'entraînement de tige de commande, dans lequel le procédé est utilisé pour fabriquer l'ensemble de bobine électromagnétique de mécanisme d'entraînement de tige de commande selon l'une quelconque des revendications 1 à 8, dans lequel le procédé comprend les étapes suivantes, mises en oeuvre séquentiellement :
S1, enroulement d'un bobinage sur un corps de bobine (4) de manière à obtenir la bobine (3), et incorporation de la bobine (3) obtenue dans le trou d'insertion (11) de la première culasse (1) ;
S2, encapsulage de l'ensemble composé de la bobine (3) et de la première culasse (1) de manière à obtenir une couche d'enrobage (2) dans un espace entre une paroi de trou du trou d'insertion (11) et la bobine (3) ;
S3, réalisation de l'ensemble complet de la première culasse (1) et de la deuxième culasse (5),
**caractérisé en ce que**
parmi la première culasse (1) et la deuxième culasse (5), une conductivité thermique de la première culasse (1) est plus élevée qu'une conductivité thermique de la deuxième culasse (5).

10. Procédé de fabrication de l'ensemble de bobine électromagnétique de mécanisme d'entraînement de tige de commande selon la revendication 9, dans lequel une forme spécifique de l'ensemble dans l'étape S3 adopte un assemblage par boulon, et une bague d'étanchéité (7) est disposée sur une surface d'assemblage de la première culasse (1) et de la deuxième culasse (5).
